# EUROPÄISCHE PATENTSCHRIFT

(11) **EP 4 302 852 B1**
(45) Veröffentlichungstag und Bekanntmachung des Hinweises auf die Patenterteilung: **01.04.2026**
(21) Anmeldenummer: 22204373.9
(22) Anmeldetag: 28.10.2022
(51) Int. Cl.: B01D 24/10

(54) **FILTERVORRICHTUNG**
FILTER DEVICE
DISPOSITIF DE FILTRATION

(30) Priorität: 06.07.2022 DE 202022103779 U
(43) Veröffentlichungstag der Anmeldung: 10.01.2024
(73) Patentinhaber: Fidica GmbH & Co. KG, 63768 Hösbach (DE)
(72) Erfinder: SCHUHMACHER, Andre, 63755 Alzenau (DE); REINHART, Thomas, 63843 Niedernberg am Main (DE); VÖLKER, Manfred, 63825 Blankenbach (DE)
(74) Vertreter: Flosdorff, Jürgen

(56) Entgegenhaltungen:
- US-A- 3 307 581
- US-A- 3 730 349
- US-A- 5 919 373
- US-A1- 2016 153 569

## Beschreibung

Ziel der Entwicklung ist es, einen großvolumigen Disposable-Filter kostengünstig für unterschiedliche Filterzwecke einzusetzen, mit dem aus Rohwasser beispielsweise für labor-, pharma- und medizintechnische Anwendungen gebrauchsfertiges Reinstwasser oder auch Trinkwasser aufbereitet werden kann. Der Filter soll mit einem minimalen Handlings-Aufwand anzuschließen sein, sehr gute hygienische Eigenschaften aufweisen und codierbar für unterschiedliche Filtermedien sein.

Als Filtermaterialien können Tauscherharze wie z.B. Mischbettharze, aber auch Filterkohle, oder spezielle Filtermedien für Arsen und Nitrat als auch deren Kombination in der Filtervorrichtung verwendet werden.

Das für Laboranwendungen gebrauchsfertige Reinstwasser wird bisher meist durch ein mehrstufiges Druck-Filtrationsverfahren erzeugt, wobei in der Regel wenige Verbrauchsmaterialien benötigt werden. Die Technik ist jedoch wartungsintensiv und verursacht hohe Kosten bei einem störungsbedingten Ausfall. Die bekannte chemische Austauschfiltration mit Mischbettharzen und nachfolgenden Polischerharzen ist technisch unproblematisch, verursacht aber höhere Gebrauchskosten.

Das bisher anzutreffende Herausnehmen von Filtermedien aus dem Filterbehälter kann zu einer Verschmutzung der Sauberbereiche der Filtervorrichtungen führen, wobei zum Entleeren und Wiederbefüllen einer Filtervorrichtung entsprechende Hilfsmaterialien benötigt werden.

US 3,307,581 befasst sich mit einem Steuerventil für eine Wasserweichmachervorrichtung, die einen mit einem Hals versehenen Weichmachertank enthält, der ein Bett aus Ionenaustauschmaterial enthält. Auf dem Behälterhals ist ein Adapter mit Schrauben befestigt, der eine mittige Öffnung enthält, die mit einem Innengewinde versehen ist. In dieses Innengewinde ist ein Nippel eingeschraubt, der das untere Ende des Ventilkörpers bildet, in dem ein Dichtkolben aufwärts und abwärts bewegbar ist. Der Dichtkolben wird dabei durch einen hydraulischen Motor aufwärts und abwärts bewegt, der sich am oberen Ende des Ventils befindet. Das Steuerventil hat eine Einlassöffnung, durch die zu behandelndes Wasser in das Steuerventil eintritt und eine Wasserauslassöffnung, durch die das behandelte Wasser nach Durchlauf durch das Weichmacherbett austritt, wenn sich der Dichtkolben in der oberen Endposition in dem Steuerventil befindet. Wenn der Dichtkolben in die untere Position verschoben ist, befindet er sich in der Regenerationsposition, in der eine Salzlösung durch das Filtermaterial strömt, die anschließend durch einen Spülvorgang wieder ausgeschwemmt wird.

Es besteht ein Bedarf nach einer Filtervorrichtung, die einfach zu handhaben ist und hinsichtlich der Lagerung, Hygiene und Qualität höchsten Anforderungen genügt. Außerdem soll eine solche Filtervorrichtung geringe Anschaffungskosten und Betriebskosten verursachen.

Diese Aufgabe wird erfindungsgemäß durch die Merkmale des Patentanspruchs 1 gelöst.

Vorteilhafte Ausgestaltungen der Erfindung sind in den Unteransprüchen gekennzeichnet.

Die Erfindung sieht vor, dass die Filtervorrichtung einen mit einem Behälterhals versehenen Behälter enthält, der bevorzugt im Kunststoff-Blasverfahren hergestellt ist und mit einem Filtermaterial gefüllt ist. Der aus PET- oder HDPE hergestellte Behälter hat zweckmäßigerweise eine ballige oder flaschenförmige Form und ein bevorzugtes Fassungsvermögen von 5-50 I. Die Wandstärke sollte kleiner 1 mm betragen. Am Behälterhals, der Wülste oder Gewinde aufweist, wird ein Behälteranschlusskopf durch umfassende Rast- oder Gewindebefestigungen befestigt.

Mit Vorteil erhält der transparente, wahlweise auch farbige PET- oder HDPE-Behälter einen Siebboden aus einem hydrophilen Material, Kies oder starren Konstruktionselementen, auf dem das Filtermedium angeordnet ist. Unterschiedliche Filtermedien können getrennt geschichtet z.B. durch hydrophile Trennlagen angeordnet sein.

Durch das Filtermedium wird das Filtratsteigrohr formschlüssig vom Siebboden in den Behälteranschlusskopf geführt. Am oberen Endbereich ist das Filtratsteigrohr bevorzugt im Behälteranschlusskopf gehalten. Die obere Befestigung des Filtratsteigrohres erfolgt in einer Nut , in die ein umfassender Rastverschluss des Behälteranschlusskopfes einrastet.

Im Behälteranschlusskopf befindet sich ein Schaumstoff oder Filtervlies, durch das das von oben zuströmende Rohwasser verteilt nach unten fließen kann. Ebenso wird ein Austritt des Filtermaterials verhindert.

Das Filtratsteigrohr kann in eine am Boden des Behälters angeordnete Schicht aus einem hydrophilen Schaumstoff oder Filtervlies eingesteckt sein und an dem eingesteckten Endabschnitt Löcher zum Eintritt von gefiltertem Filtrat aufweisen. Die unteren Öffnungen des Filtratrohres können von einem zusätzliches Sieb zur Verhinderung des Eintrages von Filtermedium abgedeckt sein.

Mit großem Vorteil wird eine Anschlusseinheit, die an ihrer Unterseite über eine hufeisenförmige Aufnahme-Nut verfügt, auf den ringförmigen Aufnahmebund des Behälteranschlusskopfes geschoben.

Zur Fixierung und Dichtung der Anschlusseinheit auf dem Behälter bzw. des Behälteranschlusskopfes wird nach vollständigem Aufschieben der Anschlusseinheit ein Griff , der als Excenterhebel ausgebildet ist, um 180° vollständig geschwenkt und damit die Anschlusseinheit auf dem Behälter konnektiert. Dabei drückt ein Anschlussbund des Dichtkolbens auf eine Flaschenlippendichtung der Anschlusseinheit und stellt so eine formschlüssige, dichtende Verbindung der Anschlusseinheit und der Filterflasche her.

Mit Vorteil umfasst eine untere stufig abgesetzte Bohrung des Dichtkolbens das obere Ende des Filtratsteigrohres und dichtet dieses mittels O-Ring ab. Durch abgestimmte Maße dieser stufig absetzten Bohrung des Dichtkolbens mit dem Filtratrohr lassen sich verwechslungssicher unterschiedliche Filtermedien-, bzw. Behälter codierbar anschließen.

Bei der erfindungsgemäßen Filtervorrichtung wird der Filtervorgang durch den Dichtkolben in der Anschlusseinheit ausgelöst, indem dieser durch den Excenterhebel abgesenkt wird, wodurch das Rohwasser aus der Rohwasserzulaufleitung in das Filtermaterial in dem Behälter strömen kann und gefiltertes Reinwasser bzw. Filtrat durch das Filtratsteigrohr und die Filtratablaufleitung aus der Filtervorrichtung austritt.

Das Rohwasser tritt entweder infolge des Wasserdrucks in der Zuführleitung oder durch den von einer Pumpe erzeugten Druck in den Behälter ein, und es läuft als Filtrat aufgrund dieses Wasserdrucks aus dem Behälter ab. Für diesen Filtervorgang ist nur ein geringer Wasserdruck von kleiner 2 bar erforderlich, so dass der Behälter nur eine geringe Wandstärke von ca. 0,5mm haben muss, um dem Betriebsdruck stand zu halten.

Nach einem weiteren Vorschlag ist in dem Dichtkolben eine längliche Sackbohrung ausgebildet, die in axialer Richtung des Dichtkolbens verläuft und vom unteren Ende des Dichtkolbens ausgeht. Die Sackbohrung erstreckt sich etwa über die halbe Länge des Dichtkolbens und ist am oberen geschlossenen Endbereich mit einer in Querrichtung durch den Dichtkolben verlaufenden Querbohrung verbunden. Durch die Anschlusseinheit verlaufen im Abstand übereinander zwei Kanäle quer durch die Anschlusseinheit bis zu dem Dichtkolben, wobei die Kanäle außen an der Anschlusseinheit mit Schlauchtüllen versehen sind, an die die Rohwasserzulaufleitung und die Filtratablaufleitung anschließbar sind.

In der abgesenkten Lage des Dichtkolbens ist der obere dieser Kanäle mit der Querbohrung des Dichtkolbens verbunden, so dass Filtrat aus der Filtervorrichtung abfließen kann.

Die zugeführte Flüssigkeit fließt in der abgesenkten Lage des Dichtkolbens über einen Ringspalt, der um den Dichtkolben verläuft, über dessen Flüssigkeitskanäle und Zuflussnieren des Dichtkolbens durch das obere Filtersieb und weiter über die unten perforierten Öffnungen des Behälteranschlusskopfes gut verteilt in das Filtermedium hinein.

Über den Siebboden fließt die Flüssigkeit gleichmäßig verteilt in das Filtratsteigrohr über die Mittelbohrung des Dichtkolbens als Filtrat zurück.

Wahlweise kann die Flüssigkeitszufuhr bzw. der Filtratabfluss entgegen der beschriebenen Form umgekehrt werden.

Außerdem kann vorgesehen sein, dass ein Entlüftungskanal mit einem Entlüftungsventil von außen durch die Anschlusseinheit zu dem Ringspalt bzw. Hohlraum um den Dichtkolben verläuft, und dass das Entlüftungsventil ein Betätigungselement aufweist, das auf Druck hin das Entlüftungsventil öffnet. Dabei kann Luft oder ein Luft/Wassergemisch aus dem Inneren des Behälters zweckmäßigerweise über den Ringspalt und einer besonderen Luftauslassöffnung durch einen kleinen Schlauch austreten, so dass praktisch der gesamte Innenraum des Behälters mit durchlaufender Flüssigkeit gefüllt sein kann.

Wenn die Leistungsfähigkeit des Filtermaterials erschöpft ist, wird der Behälter mitsamt dem Filtermaterial und dem Filtratsteigrohr verworfen und durch eine neue Anordnung ersetzt, wobei lediglich die Anschlusseinheit, die dauerhaft mit der Rohwasserzulaufleitung und der Filtratablaufleitung verbunden sein kann, für die nächste Anwendung beibehalten wird.

Zum Abkoppeln der Flasche von der Anschlusseinheit wird der Exzenterhebel vollständig geschwenkt, der Dichtkolben dabei nach oben gezogen und die gepresste Lippendichtung freigegeben, dadurch kann die Anschlusseinheit vom Behälteranschlusskopf getrennt bzw. seitlich abgezogen werden. Ein Austreten von Flüssigkeit aus der Anschlusseinheit wird verhindert, indem die umfangsseitigen Dichtringe den Dichtkolben so positionieren, dass Zu- und Filtratöffnung geschlossen sind und damit der Anschluss tropffrei ist.

Die Filtervorrichtung ist aufgrund ihres einfachen Aufbaus mit geringen Herstellungskosten verbunden. Die Handhabung ist äußerst einfach und die Betriebskosten sind minimal. Das Behältermaterial ist gut recycelbar.

Weitere Einzelheiten der Erfindung ergeben sich aus der nachfolgenden Beschreibung einer bevorzugten Ausführungsform sowie anhand der Zeichnungen.

Dabei zeigen:

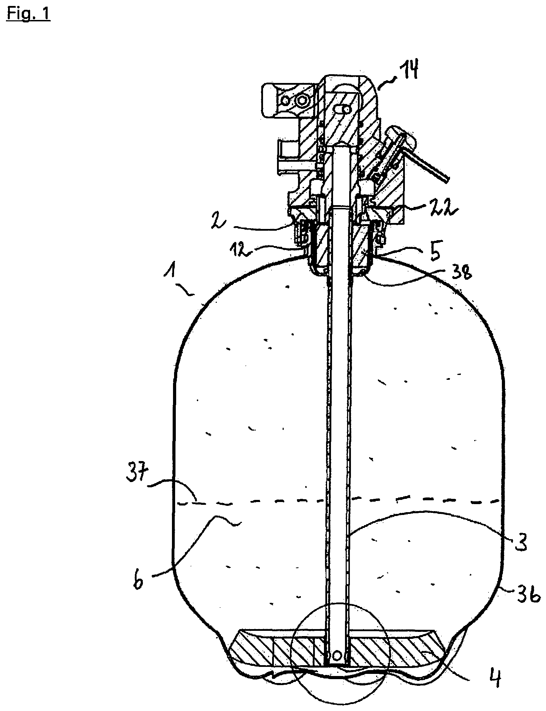

- Figur 1: eine Ausführungsform der erfindungsgemäßen Filtervorrichtung und

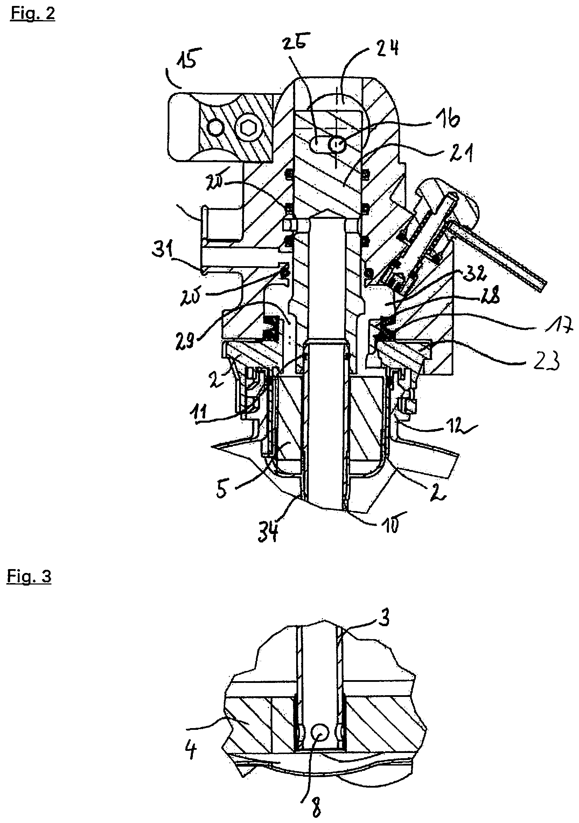

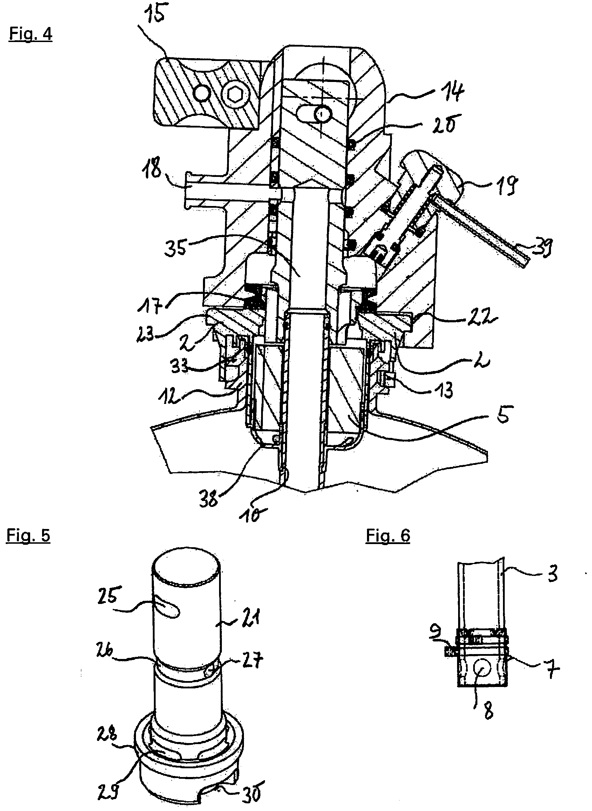

- Figuren 2 bis 6: Details der Filtervorrichtung im vergrößerten Maßstab.

Die Figuren zeigen:
Den Behälter /- Filterflasche (1) mit der transparenten Flasche (36), den Behälterhals (12) mit seinen Wülsten bzw. Gewinden (33) und den darauf befestigten Behälteranschlusskopf (2).

Das Filtratsteigrohr (3) ist formschlüssig unterseitig mit dem Siebboden (4) und mit seiner Oberseite im Behälteranschlusskopf (2) rastend (34) und einer Nut (10) fest verbunden.

Eine separate, externe Anschlusseinheit (14) wird mit einer Aufnahmenut (22) in den Aufnahmebund (23) des Behälteranschlusskopfes (2) geschoben und kann mittels Exzenterhebel (15) dichtend befestigt werden.

Die Filterflasche (1) ist mit Filtermedium (6) gefüllt. Bei Verwendung unterschiedlicher Filtermedien können diese durch Trennlagen (37) separiert werden.

Zum Konnektieren der Anschlusseinheit (14) wird der Exzenterhebel (15) entgegen die gezeichneten Lage um 180° nach rechts geschwenkt, dabei zieht der Exzenterdruckstift (16), der im Exzenter (24) befestigt ist, einen Dichtkolben (21) noch oben, und gibt die gepresste Behälterlippendichtung (17) frei. Damit kann die Anschlusseinheit (14) mit der hufeisenförmigen Nut (22) vom Aufnahmebund (23) des Behälteranschlusskopfes gelöst bzw. aufgeschoben werden.

Der Filtrationsvorgang wird bei verbundener Anschlusseinheit (14) mit dem Behälteranschlusskopf (2) eingeleitet. Die Behälterlippendichtung (17) stellt eine dichtende formschlüssige Verbindung her. Über die Flüssigkeits-Eingangstülle (31), die auch als Kupplung ausgebildet sein kann, fließt die Flüssigkeit außerhalb des Dichtkolbens (21) über Ringspalte (32) und Nieren (29) durch einen oberen stopfenförmigen Zulauffilter (5) und perforierten Öffnungen des Behälteranschlusskopfes in das Filtermedium nach unten zum Siebboden (4).

Durch den Siebboden hindurch gelangt die Flüssigkeit zu den Öffnungen (8) des Filtratsteigrohr (3). Diese Öffnungen können auch andere Geometrien aufweisen. Die Flüssigkeit wird durch das Filtratsteigrohr (3) nach oben zu einer Bohrung des Dichtkolbens (35) geleitet und wird dort über eine Filtratbohrung (27) und Filtratnut (26) über den Konnektor (18) der Anschlusseinheit weitergeführt.

Dabei greift das untere Ende des Dichtkolbens (21) O-Ring gedichtet (11) in das Filtratsteigrohr (3) ein. Die stufige Konstruktion der Bohrung (35) kann in geometrischer Abstimmung mit Filtratsteigrohr (3) zu verwechslungssicheren Anschlüssen ausgebaut werden.

Eine Abdichtung zur Umgebung wird durch die vier Dichtringe (20) verhindert. Im Behälter (1) befindliche Luft kann über eine positionierte Luftauslassöffnung (30), Zuflussnieren (29), Ringspalt (32) zum Entlüftungsventil (19) geführt. Durch Drücken des Entlüftungsventils kann Luft bzw. Luft-Wasser-Gemisch über eine Leitung (39) nach außen geführt werden.

Verbrauchtes bzw. erschöpftes Filtermedium (6) kann über leitfähigkeits-, volumen-, oder andere Messtechniken erkannt werden. Zur Diskonnektion der Filterflasche (1) wird wie bereits beschrieben der Exzenterhebel (15) vollständig geschwenkt, dabei gibt der Andrückbund (28) des Dichtkolbens (21) die Behälterlippendichtung (17) frei.

Der Filterbehälter (1) mit dem Behälteranschlusskopf (2) kann von der Anschlusseinheit (14) getrennt werden. Bedingt durch den dabei hochgezogenen Dichtkolben (21) dichten die vier O-Ringe (20) den Filtratabfluss (18) als auch Flüssigkeitseingang (31) ab. Somit wird ein Austreten von Flüssigkeit im diskonnektierten Zustand verhindert.

## Patentansprüche

1. Filtervorrichtung mit
einem mit einem Behälterhals (12) versehenden Behälter (1), der mit einem Filtermaterial (6) gefüllt ist,
einem Filtratsteigrohr (3) in dem Behälter (1), das vom Bodenbereich des Behälters (1) bis zum Behälterhals (12) reicht,
einem Behälteranschlusskopf (2), der auf dem Behälterhals befestigt ist und Kanäle aufweist, die mit einer Flüssigkeitszulaufleitung (31) und einem stopfenförmigen Zulauffilter (5) fluidisch verbunden sind,
einer Anschlusseinheit (14) mit einem Dichtkolben (21), der in der Anschlusseinheit absenkbar und aufwärts bewegbar angeordnet ist,
**dadurch gekennzeichnet,**
**dass** die Anschlusseinheit (14) eine Aufnahmenut (22) aufweist, mit der sie in einen Aufnahmebund (23) des Behälteranschlusskopfs (2) schiebbar ist, dass der Dichtkolben (21) in der Anschlusseinheit (14) absenkbar angeordnet ist, um die Flüssigkeitszulaufleitung (31) mit dem Filtermaterial (6) in dem Behälter (1) und das Filtratsteigrohr (3) mit einer Filtratablaufleitung (18) der Anschlusseinheit zu verbinden, und dass der Dichtkolben (21) einen Anschlussbund (28) aufweist, der beim Absenken des Dichtkolbens (21) auf eine Lippendichtung (17) der Anschlusseinheit (14) drückt, um die Anschlusseinheit (14) dicht auf dem Behälter (1) zu konnektieren.

2. Filtervorrichtung nach Anspruch 1,
**dadurch gekennzeichnet,**
**dass** der Behälter (1) im Kunststoff-Blasverfahren hergestellt ist und eine ballige oder flaschenförmige Form hat.

3. Filtervorrichtung nach einem der Ansprüche 1 oder 2,
**dadurch gekennzeichnet,**
**dass** das Filtratsteigrohr (3) in eine am Boden des Behälters angeordnete Schicht (4) aus einem hydrophilen Schaumstoff oder Filtervlies eingesteckt ist und an dem eingesteckten Endabschnitt Löcher (8) zum Eintritt von gefiltertem Filtrat in das Filtratsteigrohr (3) aufweist.

4. Filtervorrichtung nach einem der Ansprüche 1 bis 3,
**dadurch gekennzeichnet,**
**dass** das Filtratsteigrohr (3) mit seinem oberen Endbereich in einem stopfenförmigen Zulauffilter gehalten ist, der den Behälterhals (12) verschließt, wobei das obere Ende des Filtratsteigrohrs (3) aus dem stopfenförmigen Zulauffilter (5) übersteht.

5. Filtervorrichtung nach Anspruch 4,
**dadurch gekennzeichnet,**
**dass** der stopfenförmige Zulauffilter (5) aus einem Schaumstoff oder Filtervlies besteht, durch das die zu filternde Flüssigkeit fließen kann.

6. Filtervorrichtung nach einem der Ansprüche 1 bis 5,
**dadurch gekennzeichnet,**
**dass** der Behälteranschlusskopf (2) entweder auf den Behälterhals (12) aufgeschraubt oder bis zu einem Anschlag aufgeschoben und lösbar verrastet ist.

7. Filtervorrichtung nach einem der Ansprüche 1 bis 6,
**dadurch gekennzeichnet,**
**dass** der Dichtkolben (21) mittig in einer Anschlusseinheit (14) des Behälteranschlusskopfs (2) angeordnet und in der Anschlusseinheit (2) vertikal verschieblich gehalten ist und in der abgesenkten Lage dicht mit dem Filtratsteigrohr (3) verbunden ist.

8. Filtervorrichtung nach einem der Ansprüche 1 bis 7,
**dadurch gekennzeichnet,**
**dass** das obere Ende des Dichtkolbens (21) antriebsmäßig mit einem Exzenter (24) verbunden ist, der durch einen schwenkbar an der Anschlusseinheit (14) dem Behälteranschlusskopf (2) gelagerten Hebel (15) den Dichtkolben (21) aufwärts und abwärts bewegen kann.

9. Filtervorrichtung nach einem der Ansprüche 1 bis 8,
**dadurch gekennzeichnet,**
**dass** in dem Dichtkolben (21) eine längliche Sackbohrung (35) ausgebildet ist, die vom unteren Ende des Dichtkolbens (21) ausgeht und am oberen geschlossenen Endbereich mit einer in Querrichtung durch den Dichtkolben (21) verlaufenden Querbohrung (27) verbunden ist.

10. Filtervorrichtung nach einem der Ansprüche 1 bis 9,
**dadurch gekennzeichnet,**
**dass** zwei mit äußerer Schlauchtüllen (18, 31) versehene Kanäle im Abstand übereinander quer durch die Anschlusseinheit des Behälteranschlusskopfs (2) bis zu dem Dichtkolben (21) verlaufen.

11. Filtervorrichtung nach Anspruch 9,
**dadurch gekennzeichnet,**
**dass** in der abgesenkten Lage des Dichtkolbens (21) ein oberer Kanal mit der Querbohrung (27) des Dichtkolbens (21) verbunden ist, so dass Filtrat abfließen kann.

12. Filtervorrichtung nach einem der Ansprüche 10 oder 11,
**dadurch gekennzeichnet,**
**dass** ein unterer Kanal in der abgesenkten Lage des Dichtkolbens mit einem Ringspalt (32) verbunden ist, der um den Dichtkolben (21) verläuft und sich bis zum unteren Ende des Behälteranschlusskopfs (2) erstreckt, sodass zugeführte Flüssigkeit aus dem Ringspalt (32) durch den stopfenförmigen Zulauffilter (5) ins Innere des Behälters (1) fließen kann.

13. Filtervorrichtung nach Anspruch 12,
**dadurch gekennzeichnet,**
**dass** ein Entlüftungskanal (30) mit einem Entlüftungsventil (19) von außen durch die Anschlusseinheit (14) des Behälteranschlusskopfs (2) zu dem Ringspalt (32) verläuft, und
**dass** das Entlüftungsventil (19) einen Betätigungskopf aufweist, der bei Ausübung einer Druckkraft das Entlüftungsventil (19) öffnet.

## Claims

1. Filter apparatus including a container (1), which is provided with a container neck (12) and is filled with a filter material (6), a filtrate riser pipe (3) in the container (1), which extends from the base region of the container (1) to the container neck (12), a container connection head (2), which is fastened to the container neck and affords passages, which are in fluid connection with a liquid inlet line (31) and a stopper shaped inlet filter (5), a connection unit (14) with a sealing piston (21), which is arranged in the connection unit to be lowerable and upwardly movable, **characterised in that** the connection unit (14) has a mounting slot (22), with which it is slidable into a mounting flange (23) on the container connection head (2), that the sealing piston (21) is arranged to be lowerable in the connection unit (14) in order to connect the liquid inlet line (31) to the filter material (6) in the container (1) and the filtrate riser pipe (3) to a filtrate outlet line (18) in the connection unit and that the sealing piston (21) has a connection flange (28), which presses against a lip seal (17) on the connection unit (14), when the sealing piston (21) is lowered, in order sealingly to connect the connection unit (14) to the container (1).

2. Filter apparatus as claimed in Claim 1, **characterised in that** the container (1) is manufactured in a plastic blow moulding process and has a spherical or bottle shape.

3. Filter apparatus as claimed in one of Claims 1 or 2, **characterised in that** the filtrate riser pipe (3) is inserted into a layer (4) of a hydrophilic foam material or filter fleece, which is arranged on the base of the container and has holes (8) on the inserted end section for the entry of filtered filtrate into the filtrate riser pipe (3).

4. Filter apparatus as claimed in one of Claims 1 to 3, **characterised in that** the filtrate riser pipe (3) is mounted with its upper end region in a stopper shaped inlet filter, which closes the container neck (12), wherein the upper end of the filtrate riser pipe (3) protrudes out of the stopper shaped inlet filter (5).

5. Filter apparatus as claimed in Claim 4, **characterised in that** the stopper shaped inlet filter (5) consists of a foam material or filter fleece, through which the liquid to be filtered can flow.

6. Filter apparatus as claimed in one of Claims 1 to 5, **characterised in that** the container connection head (2) is either screwed onto the container neck (12) or is pushed on up to an abutment and is releasably locked.

7. Filter apparatus as claimed in one of Claims 1 to 6, **characterised in that** the sealing piston (21) is arranged centrally in a connection unit (14) on the container connection head (2) and is mounted to be vertically slidable in the connection unit (2) and is sealingly connected to the filtrate riser pipe (3) in the lowered position.

8. Filter apparatus as claimed in one of Claims 1 to 7, **characterised in that** the upper end of the sealing piston (21) is in drive connection with an eccentric (24), which can move the sealing piston (21) upwardly and downwardly by means of a lever (15) mounted on the connection unit (14) on the container connection head (2).

9. Filter apparatus as claimed in one of Claims 1 to 8, **characterised in that** formed in the sealing piston (21) there is a blind bore (35), which starts from the lower end of the sealing piston (21) and is connected at the upper, closed end region to a transverse bore (27) extending in the transverse direction through the sealing piston (21).

10. Filter apparatus as claimed in one of Claims 1 to 9, **characterised in that** two passages, with external hose connectors (18, 31), spaced above one another extend to the sealing piston (21) transversely through the connection unit on the container connection head (2).

11. Filter apparatus as claimed in Claim 9, **characterised in that**, in the lower position of the sealing piston (21), an upper passage is connected to the transverse bore (27) in the sealing piston (21) so that filtrate can flow away.

12. Filter apparatus as claimed in one of Claims 10 or 11, **characterised in that**, in the lower position of the sealing piston, a lower passage is connected to an annular gap (32), which extends around the sealing piston (21) and extends to the lower end of the container connector head (2) so that supplied liquid can flow out of the annular gap (32) through the stopper shaped inlet filter (5) into the interior of the container (1).

13. Filter apparatus as claimed in Claim 11, **characterised in that** a venting passage (30) with a venting valve (19) extends from the exterior through the connection unit (14) to the annular gap (32) and that the venting valve (19) has an actuator head which opens the venting valve (19) when a pressing force is applied to it.

## Revendications

1. Dispositif de filtration avec
un récipient (1) muni d'un col de récipient (12) qui est rempli d'un matériau filtrant (6),
un tube montant de filtrat (3) dans le récipient (1), qui s'étend de la zone de fond du récipient (1) jusqu'au col de récipient (12),
une tête de raccordement de récipient (2), qui est fixée sur le col de récipient et présente des canaux qui sont reliés fluidiquement à une conduite d'alimentation en liquide (31) et à un filtre d'alimentation en forme de bouchon (5),
une unité de raccordement (14) avec un piston d'étanchéité (21), qui est disposé dans l'unité de raccordement de manière à être abaissable et mobile vers le haut,
**caractérisé en ce**
**que** l'unité de raccordement (14) présente une rainure de réception (22) avec laquelle elle peut coulisser dans un collet de réception (23) de la tête de raccordement de récipient (2), que le piston d'étanchéité (21) est disposé de manière abaissable dans l'unité de raccordement (14) pour relier la conduite d'alimentation en liquide (31) au matériau filtrant (6) dans le récipient (1) et le tube montant de filtrat (3) à une conduite d'évacuation de filtrat (18) de l'unité de raccordement, et
**que** le piston d'étanchéité (21) présente un collet de raccordement (28) qui, lors de l'abaissement du piston d'étanchéité (21), appuie sur un joint à lèvre (17) de l'unité de raccordement (14) pour connecter hermétiquement l'unité de raccordement (14) sur le récipient (1).

2. Dispositif de filtration selon la revendication 1,
**caractérisé en ce**
**que** le récipient (1) est fabriqué dans un procédé de soufflage de plastique et a une forme bombée ou en forme de bouteille.

3. Dispositif de filtration selon l'une quelconque des revendications 1 ou 2,
**caractérisé en ce**
**que** le tube montant de filtrat (3) est inséré dans une couche (4) disposée au fond du récipient composée d'une mousse hydrophile ou d'un non-tissé filtrant et présente sur la section d'extrémité insérée des trous (8) pour l'entrée de filtrat filtré dans le tube montant de filtrat (3).

4. Dispositif de filtration selon l'une quelconque des revendications 1 à 3,
**caractérisé en ce**
**que** le tube montant de filtrat (3) est maintenu avec sa zone d'extrémité supérieure dans un filtre d'alimentation en forme de bouchon qui obture le col de récipient (12), dans lequel l'extrémité supérieure du tube montant de filtrat (3) dépasse du filtre d'alimentation en forme de bouchon (5).

5. Dispositif de filtration selon la revendication 4,
**caractérisé en ce**
**que** le filtre d'alimentation en forme de bouchon (5) est constitué d'une mousse ou d'un non-tissé filtrant par lequel le liquide à filtrer peut s'écouler.

6. Dispositif de filtration selon l'une quelconque des revendications 1 à 5,
**caractérisé en ce**
**que** la tête de raccordement de récipient (2) est soit vissée sur le col de récipient (12) soit poussée jusqu'à une butée et encliquetée de manière libérable.

7. Dispositif de filtration selon l'une quelconque des revendications 1 à 6,
**caractérisé en ce**
**que** le piston d'étanchéité (21) est disposé au centre dans une unité de raccordement (14) de la tête de raccordement de récipient (2) et maintenu déplaçable verticalement dans l'unité de raccordement (2) et est relié de manière étanche au tube montant de filtrat (3) dans la position abaissée.

8. Dispositif de filtration selon l'une quelconque des revendications 1 à 7,
**caractérisé en ce**
**que** l'extrémité supérieure du piston d'étanchéité (21) est reliée par entraînement à un excentrique (24) qui peut déplacer le piston d'étanchéité (21) vers le haut et vers le bas à l'aide d'un levier (15) monté pivotant sur l'unité de raccordement (14) la tête de raccordement de récipient (2).

9. Dispositif de filtration selon l'une quelconque des revendications 1 à 8,
**caractérisé en ce**
**qu'**un alésage borgne oblong (35) est réalisé dans le piston d'étanchéité (21), qui part de l'extrémité inférieure du piston d'étanchéité (21) et est relié sur la zone d'extrémité fermée supérieure à un alésage transversal (27) passant dans le sens transversal à travers le piston d'étanchéité (21).

10. Dispositif de filtration selon l'une quelconque des revendications 1 à 9,
**caractérisé en ce**
**que** deux canaux munis d'embouts à olive extérieurs (18, 31) passent à distance l'un au-dessus de l'autre transversalement à travers l'unité de raccordement de la tête de raccordement de récipient (2) jusqu'au piston d'étanchéité (21).

11. Dispositif de filtration selon la revendication 9,
**caractérisé en ce**
**qu'**un canal supérieur est relié à l'alésage transversal (27) du piston d'étanchéité (21) dans la position abaissée du piston d'étanchéité (21), de sorte que le filtrat puisse s'écouler.

12. Dispositif de filtration selon l'une quelconque des revendications 10 ou 11,
**caractérisé en ce**
**qu'**un canal inférieur dans la position abaissée du piston d'étanchéité est relié à une fente annulaire (32) qui passe autour du piston d'étanchéité (21) et s'étend jusqu'à l'extrémité inférieure de la tête de raccordement de récipient (2), de sorte que le liquide acheminé à partir de la fente annulaire (32) puisse s'écouler à travers le filtre d'alimentation en forme de bouchon (5) à l'intérieur du récipient (1).

13. Dispositif de filtration selon la revendication 12,
**caractérisé en ce**
**qu'**un canal de purge (30) avec une vanne de purge (19) passe de l'extérieur à travers l'unité de raccordement (14) de la tête de raccordement de récipient (2) vers la fente annulaire (32), et
**que** la vanne de purge (19) présente une tête d'actionnement qui ouvre la vanne de purge (19) lors de l'application d'une force de pression.
